# EUROPÄISCHE PATENTSCHRIFT

(11) **EP 2 675 672 B1**
(45) Veröffentlichungstag und Bekanntmachung des Hinweises auf die Patenterteilung: **05.11.2014**
(21) Anmeldenummer: 12705825.3
(22) Anmeldetag: 15.02.2012
(51) Int. Cl.: B60T 11/32, B60T 17/04, B60T 17/18

(54) **MEHRKREISSCHUTZVENTIL FÜR EINE DRUCKLUFTVERSORGUNGSEINRICHTUNG EINES FAHRZEUGS UND VERFAHREN ZUM BETREIBEN EINES MEHRKREISSCHUTZVENTILS**
MULTI-CIRCUIT PROTECTION VALVE FOR A COMPRESSED-AIR SUPPLY DEVICE OF A VEHICLE, AND METHOD FOR OPERATING A MULTI-CIRCUIT PROTECTION VALVE
SOUPAPE DE PROTECTION MULTICIRCUITS POUR DISPOSITIF D'ALIMENTATION EN AIR COMPRIMÉ D'UN VÉHICULE ET PROCÉDÉ DE FONCTIONNEMENT D'UNE SOUPAPE DE PROTECTION MULTICIRCUIT

(30) Priorität: 17.02.2011 DE 102011011395
(43) Veröffentlichungstag der Anmeldung: 25.12.2013
(73) Patentinhaber: KNORR-BREMSE Systeme für Nutzfahrzeuge GmbH, 80809 München (DE)
(72) Erfinder: KAUPERT, Oliver, 80995 München (DE)
(86) Internationale Anmeldenummer: PCT/EP2012/052571
(87) Internationale Veröffentlichungsnummer: WO 2012/110547

(56) Entgegenhaltungen:
- DE-A1- 19 954 584
- DE-A1-102007 032 389
- GB-A- 2 310 017
- US-A- 4 018 485

## Beschreibung

Die Erfindung betrifft ein Mehrkreisschutzventil für eine Druckluftversorgungseinrichtung eines Fahrzeugs, insbesondere eines Nutzfahrzeugs, mit einem ersten Anschluss für eine Betriebsbremse, wobei der erste Anschluss zwei voneinander getrennte Betriebsbremskreisanschlüsse für einen ersten Betriebsbremskreis und einen zweiten Betriebsbremskreis umfasst, und wobei der erste Betriebsbremskreisanschluss durch ein erstes Betriebsbremskreisüberströmventil und der zweite Betriebsbremskreisanschluss durch ein zweites Betriebsbremskreisüberströmventil abgesichert sind, und einem zweiten Anschluss für eine Feststellbremse, der durch ein Überströmventil abgesichert ist, wobei der erste Betriebsbremskreis oder der zweite Betriebsbremskreis vorrangig befüllbar ist, und wobei das Überströmventil eine mit einem Ventileingangsdruck beaufschlagbare erste Wirkfläche und eine mit einem Ventilausgangsdruck beaufschlagbare zweite Wirkfläche aufweist.

Die Erfindung betrifft weiterhin ein Verfahren zum Betreiben eines Mehrkreisschutzventils für eine Druckluftversorgungseinrichtung eines Fahrzeugs, insbesondere eines Nutzfahrzeugs, mit einem ersten Anschluss für eine Betriebsbremse, wobei der erste Anschluss zwei voneinander getrennte Betriebsbremskreisanschlüsse für einen ersten Betriebsbremskreis und einen zweiten Betriebsbremskreis umfasst, und wobei der erste Betriebsbremskreisanschluss durch ein erstes Betriebsbremskreisüberströmventil und der zweite Betriebsbremskreisanschluss durch ein zweites Betriebsbremskreisüberströmventil abgesichert sind, und einem zweiten Anschluss für eine Feststellbremse, der durch ein Überströmventil abgesichert ist, wobei der erste Betriebsbremskreis oder der zweite Betriebsbremskreis vorrangig befüllt wird. Moderne Fahrzeuge, beispielsweise Nutzfahrzeuge wie schwere Lastkraftwagen, verfügen häufig über eine pneumatisch betriebene Bremsanlage, die sich aus einer Betriebsbremse und einer Feststellbremse zusammensetzt. Üblicherweise ist die Betriebsbremse im drucklosen Zustand geöffnet, während die Feststellbremse im drucklosen Zustand geschlossen ist, um ein sicheres Abstellen des Fahrzeugs zu ermöglichen. Dementsprechend sind zum Schließen der Betriebsbremse und zum Öffnen der Feststellbremse nicht verschwindende Betriebsdrücke in den jeweiligen Funktionskreisen notwendig. Um jederzeit eine Bremswirkung auf das Fahrzeug ausüben zu können, ist es vorgeschrieben, dass die Betriebsbremse vor der Feststellbremse auf ein zum Abbremsen des Fahrzeugs ausreichendes Druckniveau befüllt wird. Auf diese Weise soll sichergestellt werden, dass die Feststellbremse nicht gelöst werden kann, solange über die Betriebsbremse keine ausreichende Bremswirkung bereitgestellt wird.

Um diese gesetzliche Forderung zu erfüllen, sind im Stand der Technik unterschiedliche Lösungen bekannt, wobei die grundsätzliche Idee in allen Fällen darauf beruht, die Versorgung des Feststellbremskreises, das heißt die Befüllung dieses Kreises, zu verzögern, bis ausreichend Druck und damit Bremskraft in der Betriebsbremse vorhanden ist beziehungsweise bereitgestellt werden kann.

Es ist beispielsweise bekannt, Überströmventile, die zwei voneinander unabhängige Betriebsbremskreise der Betriebsbremse gegeneinander absichern, aus einem zentralen Bereich eines Mehrkreisschutzventils parallel zueinander anzuströmen. Ausgangsseitig, das heißt in Richtung auf die jeweiligen Betriebsbremskreise zweigt hinter dem jeweiligen Überströmventil jeweils ein Abzweig mit einem Rückschlagventil ab. Beide Abzweige münden in einer gemeinsamen Druckleitung, aus der wiederum der Feststellbremskreis über ein Überströmventil versorgt wird. Auf diese Weise ist sichergestellt, dass mindestens einer der beiden Betriebsbremskreise einen Betriebsdruck in Höhe des Öffnungsdrucks des den Feststellbremskreis absichernden Überströmventils zur Verfügung hat, bevor dieses öffnet und der Feststellbremskreis mit Druckluft versorgt wird.

Als weitere Lösung ist bekannt, die Betriebsbremskreise und den Feststellbremskreis parallel zueinander aus einem zentralen Bereich zu befüllen, wobei in den jeweiligen Anschlüssen Überströmventile angeordnet sind, die parallel zueinander angeströmt werden. Eine Reihenfolge der Befüllung kann über unterschiedliche Öffnungsdrücke der Überströmventile realisiert sein, wobei ausreichend große Sicherheitsabstände zwischen den verschiedenen Öffnungsdrücken der Betriebsbremskreise und des Feststellbremskreises einzuhalten sind.

Die DE 10 2007 032 389 A1 beschreibt eine Druckluftversorgungseinrichtung mit einem Mehrkreisschutzventil, wobei ein Anschluss für die Betriebsbremse zwei voneinander getrennte Betriebsbremskreisanschlüsse für einen ersten Betriebsbremskreis und einen zweiten Betriebsbremskreis umfasst, die jeweils durch ein Betriebsbremskreisüberströmventil abgesichert sind, und wobei das Mehrkreisschutzventil weiterhin einen Anschluss für eine Feststellbremse umfasst, der ebenfalls durch ein Überströmventil abgesichert ist.

Es ist außerdem bekannt ein 2/2-Sperrventil, welches mit den Betriebsdrücken aus den Betriebsbremskreisen angesteuert werden kann, vorzusehen, um die Versorgung, das heißt das Befüllen, des Feststellbremskreises zu verhindern. Wenn zum Öffnen dieses Sperrventils ein ausreichender Betriebsdruck in einem oder mehreren Betriebsbremskreisen notwendig ist, ist die gesetzliche Vorgabe hinsichtlich der Befüllreihenfolge ebenfalls erfüllt.

Eine alternative Lösung, die insbesondere verwendet werden kann, wenn die Luftaufbereitungseinheit über eine elektronische Steuerung verfügt, besteht darin, den Druck in den Betriebsbremskreisen zu überwachen. Solange die gemessenen Drücke nicht zur Erzeugung der benötigten Bremskraft ausreichen, wird die Versorgung des Feststellbremskreises blockiert. Zu diesem Zweck kann beispielsweise über ein 3/2-Wegeventil, welches als Magnetventil ausgeführt sein kann, Druck in einen Federraum des den Feststellbremskreis absichernden Überströmventils geleitet werden, so dass der maximal verfügbare Druck im zentralen Bereich, aus dem der Feststellbremskreis versorgt wird, nicht ausreicht, um das Überströmventil zu öffnen. Erst wenn ein ausreichender Druck in den Betriebsbremskreisen erkannt wird, wird der Federraum über das Magnetventil entlüftet, so dass der Druck im zentralen Bereich ausreichend ist, um das Überströmventil zu öffnen. Ab diesem Zeitpunkt wird der Feststellbremskreis mit Druckluft versorgt.

Die Aufgabe der vorliegenden Erfindung besteht darin, eine alternative rein pneumatische Lösung vorzusehen.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Die Erfindung baut auf dem Stand der Technik dadurch auf, dass das Überströmventil eine mit einem Betriebsbremsdruck aus dem nicht vorrangig befüllten Betriebsbremskreis der Betriebsbremse beaufschlagbare dritte Wirkfläche aufweist, und dass die über die drei Wirkflächen erzeugten Kräfte einer Schließkraft entgegenwirken, um das Überströmventil zu öffnen oder offen zu halten. Auf diese Weise kann das Öffnen des Überströmventils von einem ausreichenden Betriebsbremsdruck in beiden Betriebsbremskreisen abhängig gemacht werden, da der niedrigere Betriebsbremsdruck über die dritte Wirkfläche direkt einen der Schließkraft entgegenwirkenden Beitrag zum Öffnen des Überströmventils beiträgt. Somit kann die gesetzliche Vorgabe der Befüllreihenfolge, das heißt Betriebsbremskreis vor Feststellbremskreis sichergestellt werden, wobei insbesondere beide Betriebsbremskreise vor dem Feststellbremskreis befüllt werden. Vorrangig kann dabei vorrangig gegenüber dem anderen Betriebsbremskreis oder vorrangig gegenüber allen anderen Verbraucherkreisen bedeuten, das heißt sowohl gegenüber dem anderen Betriebsbremskreis als auch gegenüber dem Feststellbremskreis.

Weiterhin kann vorgesehen sein, dass das erste Betriebsbremskreisüberströmventil einen niedrigeren Öffnungsdruck als das zweite Betriebsbremskreisüberströmventil aufweist. Insbesondere kann auf diese Weise zunächst immer der erste Betriebsbremskreis befüllt werden, bevor anschließend der zweite Betriebsbremskreis befüllt werden kann, welcher wiederum über die an der dritten Wirkfläche erzeugte Kraft dann das Öffnen des Überströmventils ermöglichen kann. Auf diese Weise kann sichergestellt werden, dass die Befüllung beider Betriebsbremskreise vor der Befüllung des Feststellbremskreises abgeschlossen ist.

Es kann vorgesehen sein, dass parallel zu dem ersten Betriebsbremskreisüberströmventil ein Rückschlagventil angeordnet ist, das in Richtung auf den ersten Betriebsbremskreisanschluss durchströmbar ist. Auf diese Weise kann unabhängig von dem Öffnungsdruck des ersten Betriebsbremskreisüberströmventils sichergestellt werden, dass der erste Betriebsbremskreis vorrangig befüllt wird, so dass ebenfalls die Befüllung beider Betriebsbremskreise abgeschlossen ist, bevor über den Betriebsbremsdruck aus dem zweiten Betriebsbremskreis die notwendige dritte Kraft zum Öffnen des Überströmventils erzeugt wird.

Nützlicherweise kann vorgesehen sein, dass das Mehrkreisschutzventil ein Ansteuerventil mit einem ersten Ansteuerventileingangsanschluss, einem zweiten Ansteuerventileingangsanschluss und einem Ansteuerventilausgangsanschluss umfasst, wobei die zwei Ansteuerventileingangsanschlüsse jeweils mit einem der beiden Betriebsbremsdrücke von den beiden Betriebsbremskreisanschlüssen druckbeaufschlagt sind und der Ansteuerventilausgangsanschluss des Ansteuerventils die dritte Wirkfläche des Überströmventils druckbeaufschlagt. Das Ansteuerventil kann dabei beispielsweise als ein "Select-Low"-Ventil ausgeführt sein, welches den niedrigeren an den beiden Ansteuerungsventileingangsanschlüssen anstehenden Druck am Ansteuerungsventilausgangsanschluss ausgibt. Somit kann immer der niedrigere Betriebsbremsdruck aus dem ersten Betriebsbremskreis oder dem zweiten Betriebsbremskreis zur Druckbeaufschlagung der dritten Wirkfläche des Überströmventils herangezogen werden. Dies ermöglicht die Befüllung beider Betriebsbremskreise vor der Befüllung des Feststellbremskreises, wobei die Befüllreihenfolge der beiden Betriebsbremskreise variabel, das heißt insbesondere auch zufällig, sein kann.

Vorteilhafterweise kann vorgesehen sein, dass der Feststellbremskreis aus den Betriebsbremskreisen nachversorgt ist. Die Nachversorgung kann beispielsweise aus dem ersten Betriebsbremskreis erfolgen, so dass der Ventileingangsdruck des Überströmventils aus dem ersten Betriebsbremskreis bereitgestellt wird. Somit kann die vorrangige Befüllung zumindest eines der Betriebsbremskreise gegenüber dem Feststellbremskreis sichergestellt werden.

Insbesondere kann vorgesehen sein, dass das Mehrkreisschutzventil ein Versorgungsventil mit einem ersten Versorgungsventileingangsanschluss, einem zweiten Versorgungsventileingangsanschluss und einem Versorgungsventilausgangsanschluss umfasst, wobei die zwei Versorgungsventileingangsanschlüsse des Versorgungsventils jeweils mit einem der beiden Betriebsbremsdrücke von den beiden Betriebsbremskreisanschlüssen druckbeaufschlagt sind und der Versorgungsventilausgangsanschluss des Versorgungsventils den Ventileingangsdruck des Überströmventils bereitstellt. Das Versorgungsventil kann beispielsweise als ein "Select-High"-Ventil ausgeführt sein, so dass für die Versorgung des Feststellbremskreises nur ein Betriebsbremskreis funktionsfähig sein muss.

Weiterhin kann vorgesehen sein, dass der Feststellbremskreis parallel zu den Betriebsbremskreisen druckversorgt ist. Die Versorgung des Feststellbremskreises kann so unabhängig von einem Defekt der Betriebsbremskreise sichergestellt werden.

Insbesondere kann vorgesehen sein, dass die über die drei Wirkflächen erzeugten Kräfte einzeln kleiner sind als die Schließkraft. Somit kann die Funktion des Überströmventils zur Absicherung des Feststellbremskreises beibehalten werden, da bei einem Wegfall des Ventileingangsdrucks an der ersten Wirkfläche und des Betriebsbremsdrucks an der dritten Wirkfläche die an der zweiten Wirkfläche erzeugte Kraft nicht ausreichend ist, um das Überströmventil gegen die Schließkraft offen zu halten. Weiterhin wird auf diese Weise bei der Erstbefüllung, das heißt bei einem drucklosen Feststellbremskreis, sichergestellt, dass zur Befüllung des Feststellbremskreises neben einem ausreichenden Ventileingangsdruck an der ersten Wirkfläche auch ein ausreichender Betriebsbremsdruck an der zweiten Wirkfläche notwendig ist.

Es kann vorgesehen sein, dass die über die drei Wirkflächen erzeugten Kräfte paarweise größer sind als die Schließkraft. Dies erlaubt es, das Überströmventil offen zu halten, wenn ein Druckabfall in einem der beiden Betriebsbremskreise auftritt.

Nützlicherweise kann ein derartiges Mehrkreisschutzventil als Bestandteil einer Druckluftversorgungseinrichtung eines Fahrzeugs, insbesondere eines Nutzfahrzeugs vorgesehen sein.

Das gattungsgemäße Verfahren wird dadurch weiterentwickelt, dass eine erste Wirkfläche des Überströmventils mit einem Ventileingangsdruck beaufschlagt wird, dass eine zweite Wirkfläche des Überströmventils mit einem Ventilausgangsdruck beaufschlagt wird, dass eine dritte Wirkfläche des Überströmventils mit einem Betriebsbremsdruck aus dem nicht vorrangig befüllten Betriebsbremskreis der Betriebsbremse beaufschlagt wird, und dass über die drei Wirkflächen erzeugten Kräfte einer Schließkraft entgegenwirken, um das Überströmventil zu öffnen oder offen zu halten.

Auf diese Weise können die Vorteile und Besonderheiten der Erfindung auch im Rahmen eines Verfahrens umgesetzt werden.

Die Erfindung wird nun mit Bezug auf die begleitenden Zeichnungen anhand bevorzugter Ausführungsformen beispielhaft erläutert.

Es zeigen:
- Figur 1: eine erste Ausführungsform eines Mehrkreisschutzventils;
- Figur 2: eine zweite Ausführungsform eines Mehrkreisschutzventils;
- Figur 3: eine dritte Ausführungsform eines Mehrkreisschutzventils;
- Figur 4: eine vierte Ausführungsform eines Mehrkreisschutzventils;
- Figur 5: ein Überströmventil in seiner geschlossenen Schaltposition; und
- Figur 6: ein Überströmventil in seiner geöffneten Schaltposition.

In den folgenden Zeichnungen bezeichnen gleiche Bezugszeichen gleiche oder gleichartige Teile.

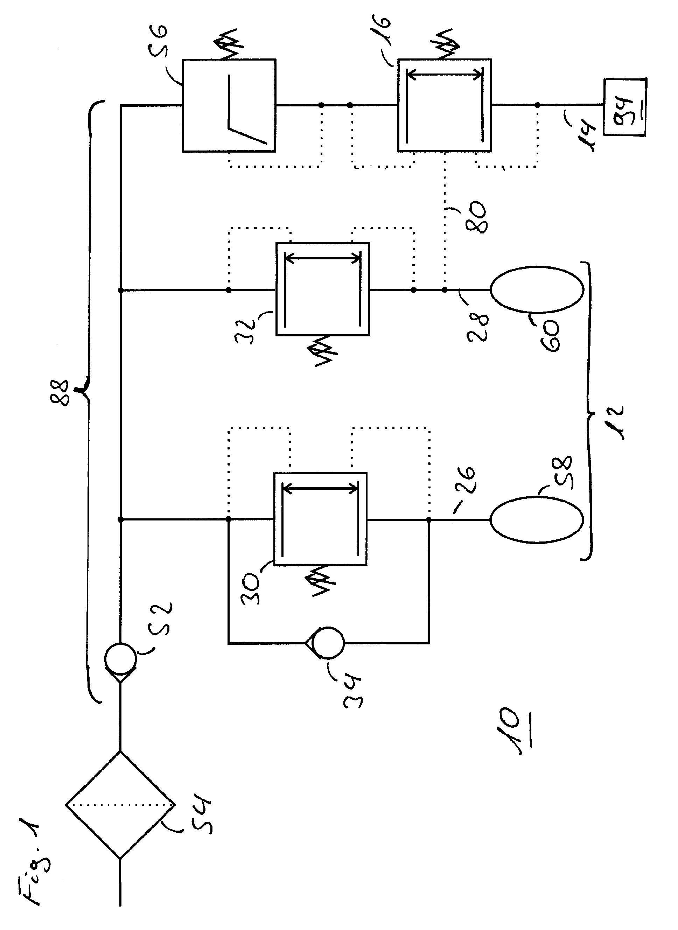

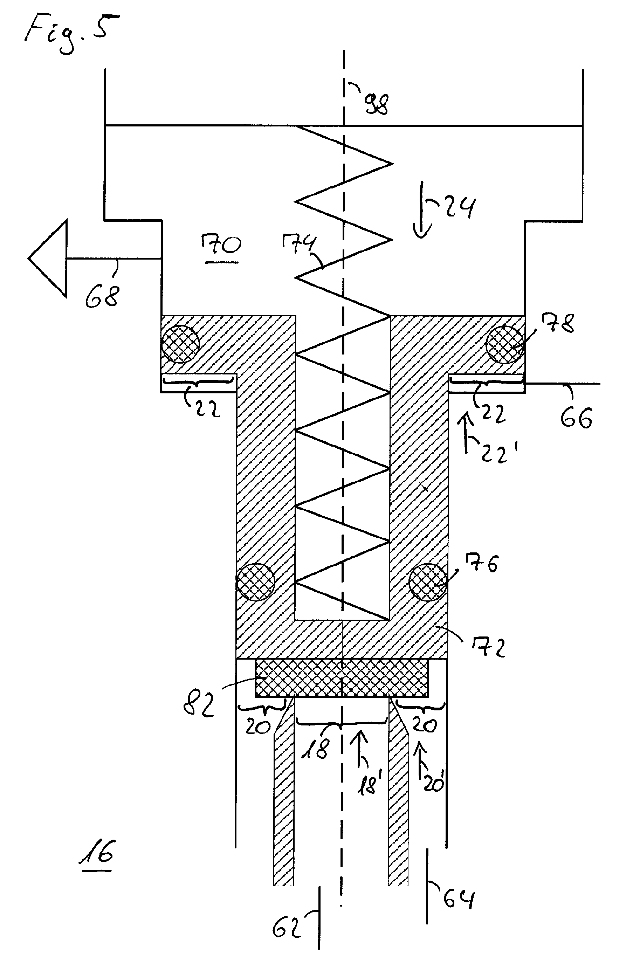

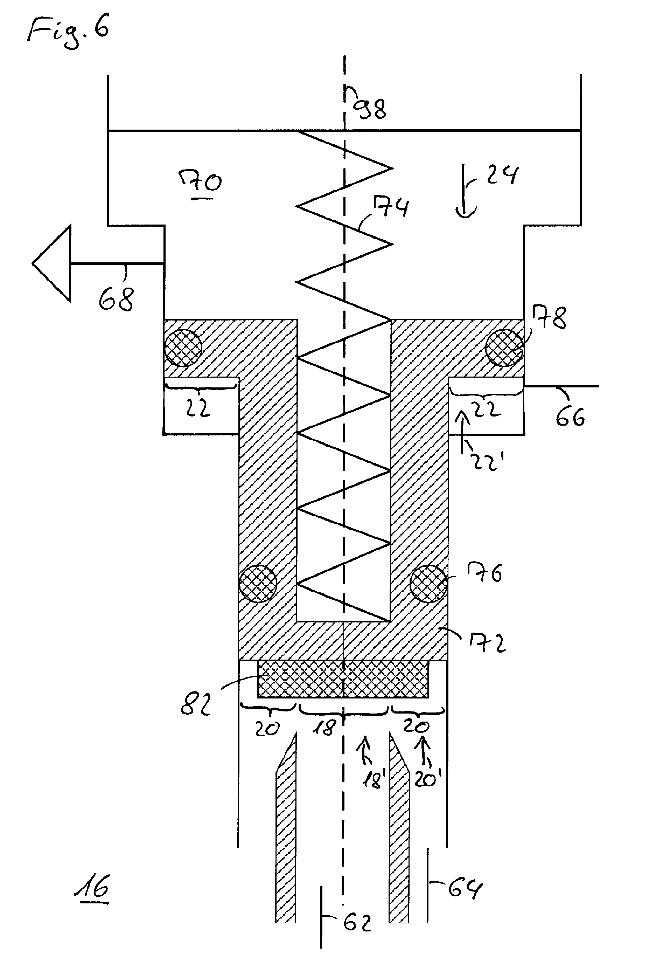

Figur 1 zeigt eine erste Ausführungsform eines Mehrkreisschutzventils. Das in Figur 1 dargestellte Mehrkreisschutzventil 10 weist einen zentralen Leitungsbereich 88 auf, der eingangsseitig von einem zentralen Rückschlagventil 52 gegen Druckverlust abgesichert ist. Eingangsseitig dargestellt ist weiterhin beispielhaft die Kopplung des zentralen Rückschlagventils 52 mit einem Lufttrockner 54 einer Druckluftaufbereitungsanlage der durch die üblicherweise vorhandene Trockenmittelpatrone symbolisiert ist. Der zentrale Leitungsbereich 88 verzweigt stromabwärts des zentralen Rückschlagventils 52, um einen ersten Anschluss 12 und einen zweiten Anschluss 14 für Druckluftverbraucher bereitzustellen. Weitere in Figur 1 nicht dargestellte Abzweige von dem zentralen Leitungsbereich 88 können je nach Bedarf vorgesehen sein, um weitere Anschlüsse bereitzustellen. Beispielsweise für eine Luftfederung, einen Fahrzeuganhänger, eine pneumatische Getriebesteuerung oder sonstige Nebenverbraucher. Der erste Anschluss 12 umfasst einen ersten Betriebsbremskreisanschluss 26 und einen zweiten Betriebsbremskreisanschluss 28, wobei der erste Betriebsbremskreisanschluss 26 durch ein erstes Betriebsbremskreisüberströmventil 30 abgesichert ist und der zweite Betriebsbremskreisanschluss 28 durch ein zweites Betriebsbremskreisüberströmventil 32 abgesichert ist. Ein erster Betriebsbremskreis 58, der an dem ersten Betriebsbremskreisanschluss 26 angeschlossen ist, sowie ein zweiter Betriebsbremskreis 60, der an dem zweiten Betriebsbremskreisanschluss 28 angeschlossen ist, sind lediglich schematisch in Form von Druckbehältern angedeutet. Parallel zu dem ersten Betriebsbremskreisüberströmventil 30 ist ein Rückschlagventil 34 als Bypass angeordnet, um eine Befüllung des ersten Betriebsbremskreises 58 unter Umgehung des ersten Betriebsbremskreisüberströmventils 30 vornehmen zu können. Der Bypass mit dem Rückschlagventil 34 ist optional und kann entfallen. Das Rückschlagventil 34 soll insbesondere eine bevorzugte Befüllung des ersten Betriebsbremskreises 58 vor dem zweiten Betriebsbremskreis 60 sicherstellen. Der zweite Anschluss 14 ist durch ein Überströmventil 16 gegen einen Druckverlust gegenüber dem zentralen Leitungsbereich 88 abgesichert. Weiterhin ist in dem zu dem zweiten Anschluss 14 führenden Abzweig auch ein Druckbegrenzer 56 vorgesehen, um an dem zweiten Anschluss 14 einen gegenüber dem für den ersten Betriebsbremskreis 58 und dem zweiten Betriebsbremskreis 60 bereitgestellten Betriebsdruck reduzierten Betriebsdruck bereitzustellen. Der Druckbegrenzer 56 begrenzt den am Überströmventil 16 anstehenden Versorgungsdruck auf etwa 8,5 bar gegenüber etwa 12,5 bar, die als Versorgungsdruck für die Betriebsbremse vorgesehen sein können. An dem zweiten Anschluss 14 kann insbesondere ein Feststellbremskreis 94 angeschlossen sein. Das Überströmventil 16 weist neben der üblichen Steuerungsmöglichkeit über einen Eingangsdruck und einen Ausgangsdruck noch einen Anschluss für eine Steuerleitung 80 auf, über die ein Betriebsdruck von dem zweiten Betriebsbremskreisanschluss 28 zur Ansteuerung des Überströmventils 16 bereitgestellt werden kann. Die genaue Funktionsweise dieses Prinzips wird im Zusammenhang mit den Figuren 5 und 6 beschrieben.

Während der Erstbefüllung, das heißt bei vollständig druckloser Anlage, wird Druckluft über das zentrale Rückschlagventil 52 in den zentralen Leitungsbereich 88 geleitet. Von dort werden die zur Absicherung des ersten Betriebsbremskreisanschlusses 26, des zweiten Betriebsbremskreisanschlusses 28 und des Feststellbremskreises 94 vorgesehenen Betriebsbremskreisüberströmventile 30, 32 und das Überströmventil 16 parallel angeströmt. Konstruktionsbedingt kann das erste Betriebsbremskreisüberströmventil 30 einen niedrigeren Öffnungsdruck als das zweite Betriebsbremskreisüberströmventil 32 aufweisen und zuerst öffnen. In diesem Fall öffnet das erste Betriebsbremskreisüberströmventil 30 vor dem zweiten Betriebsbremskreisüberströmventil 32 und die Befüllung des ersten Betriebsbremskreises 58 erfolgt bevorzugt, das heißt vorrangig. Das Rückschlagventil 34 kann dann entfallen. Es kann allerdings auch vorgesehen sein, dass das erste Betriebsbremskreisüberströmventil 30 den selben Öffnungsdruck wie das zweite Betriebsbremskreisüberströmventil 32 aufweist, wobei es dann vom Zufall abhängt, ob das erste Betriebsbremskreisüberströmventil 30 oder das zweite Betriebsbremskreisüberströmventil 32 als erstes öffnet. Das optionale als Bypass für das erste Betriebsbremskreisüberströmventil 30 angeordnete Rückschlagventil 34 kann diese Problematik lösen, da unter Umgehung des ersten Betriebsbremskreisüberströmventils 30 eine Befüllung des ersten Betriebsbremskreises 58 über das Rückschlagventil 34 bereits bei einem Druckniveau beginnen kann, das geringer ist als der Öffnungsdruck des ersten Betriebsbremskreisüberströmventils 30. Übersteigt das Druckniveau in dem ersten Betriebsbremskreis 58 den Öffnungsdruck des zweiten Betriebsbremskreisüberströmventils 32, so öffnet auch das zweite Betriebsbremskreisüberströmventil 32, da das Druckniveau in dem ersten Betriebsbremskreis 58 gemeinsam mit dem Druckniveau in dem zentralen Leitungsbereich 88 ansteigt. Zu diesem Zeitpunkt ist das Überströmventil 16 nach wie vor geschlossen, da der dort anstehende Eingangsdruck nicht zum Öffnen des Überströmventils 16 ausreichend ist, welches einen gegenüber den beiden Betriebsbremskreisüberströmventilen 30, 32 erhöhten Öffnungsdruck aufweist. Durch die beginnende Befüllung des zweiten Betriebsbremskreises 60 wird jedoch auch über die Steuerleitung 80 ein Steuerdruck an das Überströmventil 16 übertragen, wobei beide Drücke, der Eingangsdruck und der Steuerdruck, gemeinsam schließlich ausreichen, um das Überströmventil 16 zu öffnen, so dass der Feststellbremskreis 94 befüllt werden kann. Es kann dabei vorgesehen sein, dass das zum Öffnen des Überströmventils 16 notwendige zusätzliche Druckniveau des Steuerdrucks in der Steuerleitung 80 zum Schließen des zweiten Betriebsbremskreises ausreichend ist. Auf diese Weise kann sichergestellt werden, dass beide Betriebsbremskreise 58, 60 vor dem Feststellbremskreis 94 befüllt werden.

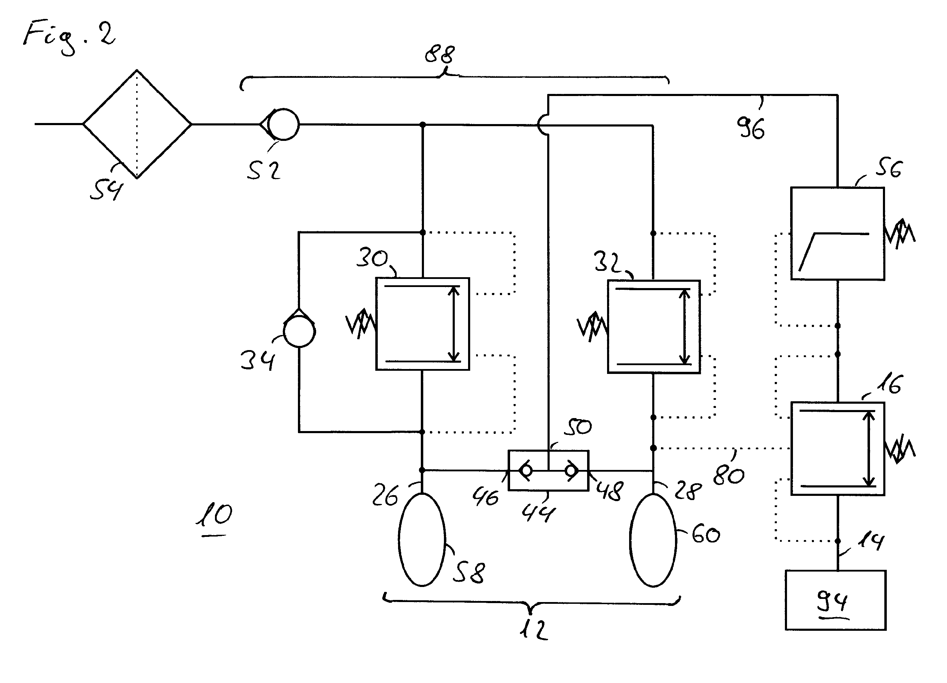

Figur 2 zeigt eine zweite Ausführungsform eines Mehrkreisschutzventils. Im Unterschied zu der aus Figur 1 bekannten Ausführungsform ist, bei der in Figur 2 dargestellten Ausführungsform des Mehrkreisschutzventils 10 der Feststellbremskreis 94 über eine Versorgungsleitung 96 aus den beiden Betriebsbremskreisanschlüssen 26, 28 nachversorgt. Zu diesem Zweck ist ein Versorgungsventil 44, das beispielsweise als "Select-High"-Ventil ausgeführt sein kann, an einem Versorgungsventilausgangsanschluss 50 mit der Versorgungsleitung 96 gekoppelt. Weiterhin ist ein erster Versorgungsventileingangsanschluss 46 mit dem ersten Betriebsbremskreisanschluss 26 gekoppelt und ein zweiter Versorgungsventileingangsanschluss 48 ist mit dem zweiten Betriebsbremskreisanschluss 28 gekoppelt. Das Versorgungsventil 44 kann beispielsweise, wie in Figur 2 dargestellt, aus zwei einfachen Rückschlagventilen aufgebaut sein, so dass der erste Betriebsbremskreis 58 und der zweite Betriebsbremskreis 60 gegeneinander abgesichert sind und am Versorgungsventilausgang 50 der höhere der beiden Drücke aus den beiden Betriebsbremskreisen 58, 60 ausgegeben wird.

Über das optionale Rückschlagventil 34 beziehungsweise einen gegenüber dem zweiten Betriebsbremskreisüberströmventil 32 niedrigeren Öffnungsdruck des ersten Betriebsbremskreisüberströmventils 30 kann, analog zur ersten Ausführungsform in Figur 1, bei der Erstbefüllung des Systems sichergestellt werden, dass beide Betriebsbremskreise 58, 60 vor dem Feststellbremskreis 94 bevorzugt befüllt werden.

Sind alle Kreise intakt und erfolgt aufgrund vieler Bremsungen eine hohe Luftentnahme durch die Betriebsbremse, die eine Druckabsenkung im System verursacht, so kann das Überströmventil 16 offengehalten werden, da an dem Versorgungseingang des Überströmventils 16 und über die Steuerleitung 80 noch Kräfte erzeugt werden können, die der Schließkraft des Überströmventils 16 ausreichend entgegenwirken. Das Funktionsprinzip entspricht daher im Wesentlichen der aus Figur 1 bekannten Ausführungsform, wobei insbesondere sichergestellt ist, dass die beiden Betriebsbremskreise 58, 60 gegenüber dem Feststellbremskreis 94 bevorzugt befüllt werden.

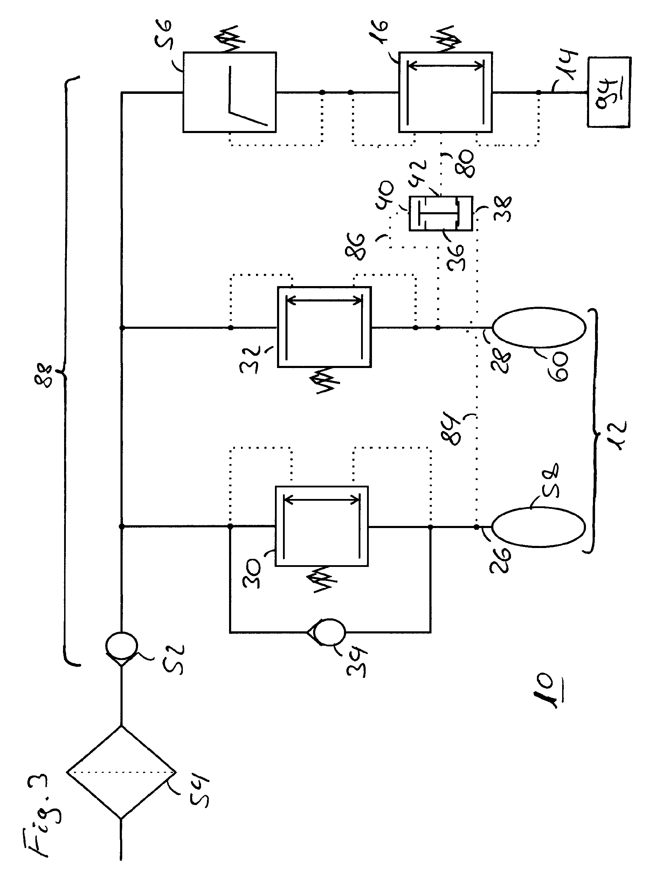

Figur 3 zeigt eine dritte Ausführungsform eines Mehrkreisschutzventils. Das in Figur 3 dargestellte Mehrkreisschutzventil 10 unterscheidet sich von dem aus der Figur 1 bekannten Mehrkreisschutzventil insbesondere durch die Art der Bereitstellung des über die Steuerleitung 80 an das Überströmventil 16 bereitgestellten Steuerdrucks. Gemäß der in Figur 3 beschriebenen Ausführungsform ist ein Ansteuerventil 36 vorgesehen, welches über einen ersten Ansteuerventileingangsanschluss 38 und einen zweiten Ansteuerventileingangsanschluss 40 sowie einen Ansteuerventilausgangsanschluss 42 verfügt. Der erste Ansteuerventileingangsanschluss 38 ist über eine erste Steuerdruckleitung 84 mit dem ersten Betriebsbremskreisanschluss 26 gekoppelt während der zweite Ansteuerventileingangsanschluss 40 über eine zweite Steuerdruckleitung 86 mit dem zweiten Betriebsbremskreisanschluss 28 gekoppelt ist. Der Ansteuerventilausgangsanschluss 42 ist wiederum über die Steuerleitung 80 mit dem Überströmventil 16 verbunden. Das dargestellte Ansteuerventil 36 kann als ein "Select-Low"-Ventil ausgeführt sein, welches an seinem Ansteuerventilausgangsanschluss 42 immer den niedrigeren der beiden an den Ansteuerventileingangsanschlüssen 38, 40 anstehenden Drücke ausgibt. Auf diese Weise kann sichergestellt werden, dass unabhängig von den Öffnungsdrücken des ersten Betriebsbremskreisüberströmventils 30 und des zweiten Betriebsbremskreisüberströmventils 32 beziehungsweise dem Vorhandensein des Rückschlagventils 34 als Bypass für das erste Betriebsbremskreisüberströmventil 30 die Befüllung des ersten Betriebsbremskreises 58 und des zweiten Betriebsbremskreises 60 gegenüber dem Feststellbremskreis 94 bevorzugt erfolgt.

Die Funktionsweise des in Figur 3 dargestellten Mehrkreisschutzventils, insbesondere das Funktionsprinzip des Überströmventils 16 entspricht dem aus den beiden vorhergehenden Figuren bekannten Mehrkreisschutzventil.

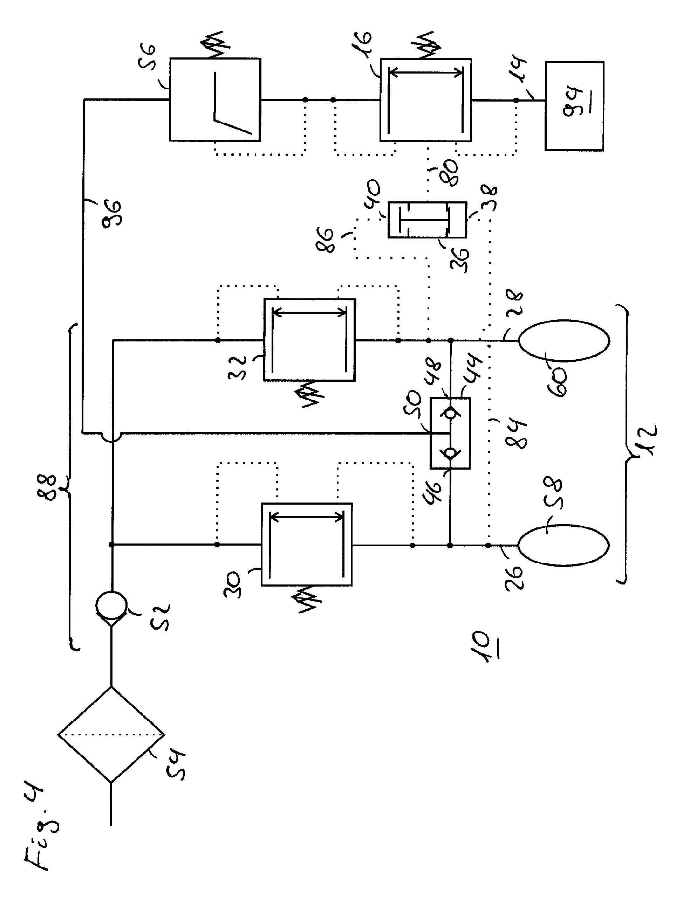

Figur 4 zeigt eine vierte Ausführungsform eines Mehrkreisschutzventils. Das in der Figur 4 dargestellte Mehrkreisschutzventil 10 unterscheidet sich von den vorherigen Ausführungsformen im Wesentlichen dadurch, dass neben dem Versorgungsventil 44, über welches der Feststellbremskreis 94 aus dem ersten Betriebsbremskreis 58 oder dem zweiten Betriebsbremskreis 60 nachversorgt wird, weiterhin das Ansteuerventil 36 zusätzlich vorhanden ist. Die Funktionen des Versorgungsventils 44 und des Ansteuerventils 36 entsprechen denen, aus den vorherigen Ausführungsformen. Das Versorgungsventil 44 verfügt daher wieder über einen ersten Versorgungsventileingangsanschluss 46, der mit dem ersten Betriebsbremskreisanschluss 26 gekoppelt ist, und einen zweiten Versorgungsventileingangsanschluss 48, der mit dem zweiten Betriebsbremskreisanschluss 28 gekoppelt ist. Über den Versorgungsventilausgangsanschluss 50 des Versorgungsventils 44, wird wieder, durch die Versorgungsleitung 96, der Feststellbremskreis 94 über das Überströmventil 16 und den Druckbegrenzer 56 nachversorgt. Das Versorgungsventil 44 kann, wie in Figur 4 dargestellt, als "Select-High"-Ventil ausgeführt sein, welches an dem Versorgungsventilausgangsanschluss 50 den höheren der beiden an den zwei Versorgungsventileingangsanschlüssen 46, 48 anstehenden Drücke aus dem ersten Betriebsbremskreis 58 und dem zweiten Betriebsbremskreis 60 ausgibt. Auf diese Weise kann unabhängig von den Öffnungsdrücken des ersten Betriebsbremskreisüberströmventils 30 und des zweiten Betriebsbremskreisüberströmventils 32 eine bevorzugte Befüllung der beiden Betriebsbremskreise 58, 60 gegenüber dem Feststellbremskreis 94 gesichert werden, da der in der Steuerleitung 80 anstehende Druck aus einem der beiden Betriebsbremskreise 58, 60 ebenso wie der in der anstehende Ventileingangsdruck des Überströmventils 16 alleine nicht ausreicht, das Überströmventil 16 gegen die Schließkraft zu öffnen, wenn der Feststellbremskreis 94 drucklos ist.

Das in der Figur 4 nicht dargestellte parallel zu dem ersten Betriebsbremskreisüberströmventil 30 angeordnete Rückschlagventil 34, das als Bypass zur Befüllung des ersten Betriebsbremskreises 58 unter Umgehung des ersten Betriebsbremskreis-Überströmventils 30 vorgesehen sein kann, kann entfallen. Weiterhin können, wegen der Kombination des Versorgungsventils 44 und des Ansteuerventils 36, die beiden Betriebsbremskreisüberströmventile 30, 32 auch identische Öffnungsdrücke aufweisen, ohne die bevorzugte Befüllung der beiden Betriebsbremskreise 58, 60 gegenüber dem Feststellbremskreis 94 zu gefährden. Durch das Zusammenspiel aus Ansteuerventil 36 und Versorgungsventil 44 wird nämlich über die Steuerleitung 80 regelmäßig ein Betriebsdruck bereitgestellt, der gegenüber dem Eingangsdruck am Überströmventil 16 aus dem jeweils anderen der beiden Betriebsbremskreis 58; 60 entnommen wird.

Im Folgenden wird die Funktionsweise des Überströmventils 16 schematisch dargestellt.

Figur 5 zeigt ein Überströmventil in seiner geschlossenen Schaltposition. Das dargestellte Überströmventil 16 ist im Querschnitt abgebildet, wobei ein rotationssymmetrischer Aufbau des Überströmventils 16 vorgesehen sein kann. Das in Figur 5 dargestellte Überströmventil 16 verfügt über einen Ventileingangsanschluss 62 und einen Ventilausgangsanschluss 64 sowie einen Ventilsteuerungsanschluss 66 und eine Entlüftung 68. In der dargestellten geschlossenen Schaltposition endet der Ventileingangsanschluss an einem Ventilsitz 82 eines im Inneren eines Schaltraumes 70 bewegbar angeordneten Schaltkolbens 72. Auf diese Weise wird eine erste Wirkfläche 18 definiert, die über den Ventileingangsanschluss 62 mit einem Ventileingangsdruck beaufschlagbar ist, um eine erste Kraft 18' parallel zu einer axialen Bewegungsrichtung 98 des Schaltkolbens 72 zu erzeugen. Der Ventilausgangsanschluss 64 definiert analog eine zweite Wirkfläche 20 über die ebenfalls analog eine zweite Kraft 20' über einen Ventilausgangsdruck parallel zu der axialen Bewegungsrichtung 98 erzeugt wird. Der Ventilsteuerungsanschluss 66 mündet in einen Bereich zwischen dem Schaltkolben 72 und einem nicht näher bezeichneten Ventilgehäuse, wobei dieser Bereich von einer Dichtung 76 und einer weiteren Dichtung 78 abgedichtet ist. Auf diese Weise wird eine dritte Wirkfläche 22 definiert, über die eine dritte Kraft 22' erzeugt werden kann, die ebenfalls parallel zu der axialen Bewegungsrichtung 98 des Schaltkolbens 72 liegt. Im drucklosen Zustand des Überströmventils 16 wird der Schaltkolben 72 von einem elastischen Element 74, welches beispielsweise als Federelement ausgeführt sein kann, in der axialen Bewegungsrichtung 98 gegen den Ventilsitz 82 gedrückt. Zu diesem Zweck übt das elastische Element 74 eine parallel zu der axialen Bewegungsrichtung 98 liegende Schließkraft 24 auf den Schaltkolben 72 aus. Das elastische Element 74 kann sich auf der dem Schaltkolben 72 gegenüber liegenden Seite des Schaltraums 70 an dem nicht näher bezeichneten Gehäuse abstützen. Der Schaltraum 70 kann über die Entlüftung 68 drucklos gehalten werden, so dass zusätzlich zu der Schließkraft 24 keine weiteren das Überströmventil 16 in seiner geschlossenen Position haltenden oder in seine geschlossene Position überführenden Kräfte entstehen. Die erste Kraft 18', die zweite Kraft 20' und die dritte Kraft 22' wirken gemeinsam entgegen der Schließkraft 24, um das Überströmventil 16 in seine geöffnete Position zu überführen.

Figur 6 zeigt ein Überströmventil in seiner geöffneten Schaltstellung. Das in Figur 6 dargestellte Überströmventil entspricht dem aus der Figur 5 bekannten Überströmventil 16 in seiner geöffneten Schaltposition. Die an dem Ventileingangsanschluss 62, dem Ventilausgangsanschluss 64 und dem Ventilsteuerungsanschluss 66 anstehenden Druckkräfte, die die erste Kraft 18', die zweite Kraft 20' und die dritte Kraft 22' erzeugen, sind gemeinsam ausreichend, um den Schaltkolben 72 entgegen der Schließkraft 24 von dem Ventilsitz 82 abzuheben, so dass der Ventileingangsanschluss 62 mit dem Ventilausgangsanschluss 64 verbunden wird.

Das in den Figuren 5 und 6 dargestellte Überströmventil 16 kann in den Ausführungsformen gemäß den Figuren 1 bis 4 zur Absicherung des Feststellbremskreises 94 verwendet werden, wobei dann der Ventilsteuerungsanschluss 66 mit der Steuerleitung 80 gekoppelt werden kann.

Die erste Wirkfläche 18, die zweite Wirkfläche 20, die dritte Wirkfläche 22 und das elastische Element 74 können zusammen so ausgelegt sein, dass die an den drei Wirkflächen 18, 20, 22 erzeugten Kräfte 18', 20', 22' im Normalbetrieb, das heißt bei den für den Betrieb ohne Defektfall vorgesehenen Druckniveaus, einzeln kleiner als die Schließkraft 24 sind. Weiterhin können die Wirkflächen 18, 20, 22 so bemessen sein, dass die entstehenden Kräfte 18', 20', 22' im Normalbetrieb jeweils paarweise größer als die Schließkraft 24 sind. Eine Anpassung der drei Wirkkräfte 18', 20', 22' ist dabei leicht über eine Veränderung des Durchmessers der ersten Wirkfläche 18, des äußeren und inneren Radius der zweiten Wirkfläche 20 sowie des äußeren und des inneren Radius der dritten Wirkfläche 22 möglich.

Falls das in den Figuren 5 und 6 dargestellte Überströmventil in einem Mehrkreisschutzventil gemäß der in Figur 1 dargestellten Ausführungsform angeordnet ist, kann eine Befüllung einer zunächst drucklosen Bremsanlage mit einer Betriebsbremse und einer Feststellbremse folgendermaßen erfolgen. Anfänglich ist das Überströmventil 16 in der in Figur 5 dargestellten geschlossenen Schaltstellung, wobei der Ventileingangsanschluss 62, der Ventilausgangsanschluss 64 und der Ventilsteuerungsanschluss 66 drucklos sind. Mit ansteigendem Druckniveau in dem zentralen Leitungsbereich 88 steigt auch an dem Ventileingangsanschluss 62 das anstehende Druckniveau an, wobei die so erzeugte erste Kraft 18' nicht zur Öffnung des Überströmventils 16 ausreicht. Sobald die Befüllung einer der beiden Betriebsbremskreise 58, 60 durch ein Öffnen eines der beiden Betriebsbremskreisüberströmventile 30, 32 beziehungsweise mit Hilfe des optionalen Bypasses mit dem Rückschlagventil 34 erfolgt, stagniert der an dem Ventileingangsanschluss 62 anstehende Druck, bis der zu befüllende Betriebsbremskreis 58; 60 das in dem zentralen Leitungsbereich 88 anstehende Druckniveau erreicht hat. Anschließend erfolgt wieder eine langsame kontinuierliche Steigerung des in dem zentralen Leitungsbereich 88 anstehenden Druckniveaus, der mit einer Erhöhung des an dem Ventileingangsanschluss 62 anstehenden Druckniveaus einhergeht. Wenn das zweite Betriebsbremskreisüberströmventil 32 öffnet, wird der zweite Betriebsbremskreis 60 befüllt und über die Steuerleitung 80 der in dem zweiten Betriebsbremskreis 60 anstehende Betriebsbremskreisdruck an den Ventilsteuerungsanschluss 66 geleitet. Zusätzlich zu der ersten Kraft 18' wird daher an der dritten Wirkfläche 22 von dem anstehenden Betriebsbremskreisdruck eine dritte Kraft 22' erzeugt, die gemeinsam mit der ersten Kraft 18' der Schließkraft 24 entgegenwirkt. Wenn der Druck in dem zweiten Betriebsbremskreis 60 ausreichend ist, beispielsweise zum Schließen des zweiten Betriebsbremskreises 60, kann auch die Summe der ersten Kraft 18' und der dritten Kraft 22' die Schließkraft 24 übersteigen und das Überströmventil 16 öffnet. Zu diesem Zeitpunkt beginnt die Befüllung des Feststellbremskreises 94 über den Ventilausgangsanschluss 64. Das zum Öffnen notwendige Druckniveau kann beispielsweise 8 bar in dem einen Betriebsbremskreis und mindestens 4 bar in dem anderen Betriebsbremskreis, besser 6,5 bar, betragen. Es ist klar, dass die Druckniveaus einstellbar sind und die genauen Zahlenwerte und Druckabstände zwischen dem ersten und dem zweiten Betriebsbremskreis systemabhängig sind, da sie mit den Befüllraten kontrolliert werden können. Die an den drei Wirkflächen 18, 20, 22 erzeugten drei Kräfte 18', 20', 22' steigen weiter an, bis schließlich die vorgesehenen Betriebsdrücke in sämtlichen an das Mehrkreisschutzventil 10 angeschlossenen Kreisen erreicht sind. Da das Überströmventil 16 hinter einem Druckbegrenzer 56 angeordnet ist, sind die an dem Ventileingangsanschluss 62 und dem Ventilausgangsanschluss 64 anstehenden Drücke geringer als der an dem Ventilsteuerungsanschluss 66 anstehende Betriebsbremsdruck.

Bei einem Defekt einer der beiden Betriebsbremskreise, beispielsweise des zweiten Betriebsbremskreises 60 fällt die an der dritten Wirkfläche 22 erzeugte dritte Kraft 22' ersatzlos weg, wenn dieser Betriebsbremskreis den Ventilsteuerungsanschluss 66 mit Druck beaufschlagt. Die Summe der an der ersten Wirkfläche 18 und der zweiten Wirkfläche 20 erzeugten ersten Kraft 18' und zweiten Kraft 20' kann jedoch noch größer als die Schließkraft 24 sein, so dass eine Druckversorgung des Feststellbremskreises 94 weiter möglich ist und das Fahrzeug betriebsbereit bleibt. Auch bei einem Defekt des anderen Betriebsbremskreises kann das Fahrzeug betriebsfähig bleiben, wobei in diesem Fall die an der dritten Wirkfläche 22 dritte Kraft 22' erhalten bleibt. Hinsichtlich der Betriebsfähigkeit des Fahrzeugs im Defektfall, das heißt beim Ausfall einer der beiden Betriebsbremskreise 58, 60 verhalten sich die in den Figuren 1 bis 4 dargestellten Ausführungsformen des Mehrkreisschutzventils 10 ähnlich. Unabhängig von der Ausführungsform wird bei einem Defekt eines der beiden Betriebsbremskreise 58, 60 die Versorgung des Überströmventils 16 sichergestellt und das Überströmventil kann offengehalten werden. Allerdings ist eine Erstbefüllung des drucklosen Feststellbremskreises 94 im Defektfall nicht immer möglich.

Ein Defekt des Feststellbremskreises 94 mit einem starken Druckabfall am Ventilausgangsanschluss 64 sorgt für einen Rückgang der an der ersten Wirkfläche 18 und an der zweiten Wirkfläche 20 erzeugten ersten Kraft 18' und zweiten Kraft 20', so dass prinzipiell lediglich die an der dritten Wirkfläche 22 erzeugte dritte Kraft 22' der Schließkraft des Überströmventils 16 entgegenwirkt. Dies hat, da die an der dritten Wirkfläche 22 erzeugte dritte Kraft 22' einzeln nicht ausreicht, um das Überströmventil 16 offen zu halten, das Schließen des Überströmventils 16 ohne große Druckverluste zur Folge.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Mehrkreisschutzventil
- 12: erster Anschluss
- 14: zweiter Anschluss
- 16: Überströmventil
- 18: erste Wirkfläche
- 18': erste Kraft
- 20: zweite Wirkfläche
- 20': zweite Kraft
- 22: dritte Wirkfläche
- 22': dritte Kraft
- 24: Schließkraft
- 26: erster Betriebsbremskreisanschluss
- 28: zweiter Betriebsbremskreisanschluss
- 30: erstes Betriebsbremskreisüberströmventil
- 32: zweites Betriebsbremskreisüberströmventil
- 34: Rückschlagventil
- 36: Ansteuerventil
- 38: erster Ansteuerventileingangsanschluss
- 40: zweiter Ansteuerventileingangsanschluss
- 42: Ansteuerventilausgangsanschluss
- 44: Versorgungsventil
- 46: erster Versorgungsventileingangsanschluss
- 48: zweiter Versorgungsventileingangsanschluss
- 50: Versorgungsventilausgangsanschluss
- 52: zentrales Rückschlagventil
- 54: Lufttrockner
- 56: Druckbegrenzer
- 58: erster Betriebsbremskreis
- 60: zweiter Betriebsbremskreis
- 62: Ventileingangsanschluss
- 64: Ventilausgangsanschluss
- 66: Ventilsteuerungsanschluss
- 68: Entlüftung
- 70: Schaltraum
- 72: Schaltkolben
- 74: elastisches Element
- 76: Dichtung
- 78: weitere Dichtung
- 80: Steuerleitung
- 82: Ventilsitz
- 84: erste Steuerdruckleitung
- 86: zweite Steuerdruckleitung
- 88: zentraler Leitungsbereich
- 94: Feststellbremskreis
- 96: Versorgungsleitung
- 98: axiale Bewegungsrichtung

## Patentansprüche

1. Mehrkreisschutzventil (10) für eine Druckluftversorgungseinrichtung eines Fahrzeugs, insbesondere eines Nutzfahrzeugs, mit
- einem ersten Anschluss (12) für eine Betriebsbremse, wobei der erste Anschluss (12) zwei voneinander getrennte Betriebsbremskreisanschlüsse (26, 28) für einen ersten Betriebsbremskreis (58) und einen zweiten Betriebsbremskreis (60) umfasst, und wobei der erste Betriebsbremskreisanschluss (26) durch ein erstes Betriebsbremskreisüberströmventil (30) und der zweite Betriebsbremskreisanschluss (28) durch ein zweites Betriebsbremskreisüberströmventil (32) abgesichert sind, und
- einem zweiten Anschluss (14) für eine Feststellbremse, der durch ein Überströmventil (16) abgesichert ist,
- wobei der erste Betriebsbremskreis (58) oder der zweite Betriebsbremskreis (60) vorrangig befüllbar ist, und
- wobei das Überströmventil (16) eine mit einem Ventileingangsdruck beaufschlagbare erste Wirkfläche (18) und eine mit einem Ventilausgangsdruck beaufschlagbare zweite Wirkfläche (20) aufweist,
**dadurch gekennzeichnet,**
- **dass** das Überströmventil (16) eine mit einem Betriebsbremsdruck aus dem nicht vorrangig befüllten Betriebsbremskreis (60; 58) der Betriebsbremse beaufschlagbare dritte Wirkfläche (22) aufweist, und
- **dass** über die drei Wirkflächen (16, 18, 20) erzeugten Kräfte (18', 20', 22') einer Schließkraft (24) entgegenwirken, um das Überströmventil (16) zu öffnen oder offen zu halten.

2. Mehrkreisschutzventil (10) nach Anspruch 1, **dadurch gekennzeichnet, dass** das erste Betriebsbremskreisüberströmventil (30) einen niedrigeren Öffnungsdruck als das zweite Betriebsbremskreisüberströmventil (32) aufweist.

3. Mehrkreisschutzventil (10) nach Anspruch 1 oder 2, **dadurch gekennzeichnet, dass** parallel zu dem ersten Betriebsbremskreisüberströmventil (30) ein Rückschlagventil (34) angeordnet ist, das in Richtung auf den ersten Betriebsbremskreisanschluss (28) durchströmbar ist.

4. Mehrkreisschutzventil (10) nach einem der Ansprüche 1 bis 3, **dadurch gekennzeichnet, dass** das Mehrkreisschutzventil (10) ein Ansteuerventil (36) mit einem ersten Ansteuerventileingangsanschluss (38), einem zweiten Ansteuerventileingangsanschluss (40) und einem Ansteuerventilausgangsanschluss (42) umfasst, wobei die zwei Ansteuerventileingangsanschlüsse (38, 40) jeweils mit einem der beiden Betriebsbremsdrücke von den beiden Betriebsbremskreisanschlüssen (26, 28) druckbeaufschlagt sind und der Ansteuerventilausgangsanschluss (42) des Ansteuerventils (36) die dritte Wirkfläche (22) des Überströmventils (16) druckbeaufschlagt.

5. Mehrkreisschutzventil (10) nach einem der Ansprüche 1 bis 4, **dadurch gekennzeichnet, dass** der Feststellbremskreis (94) aus den Betriebsbremskreisen (58, 60) nachversorgt ist.

6. Mehrkreisschutzventil (10) nach Anspruch 5, **dadurch gekennzeichnet, dass** das Mehrkreisschutzventil (10) ein Versorgungsventil (44) mit einem ersten Versorgungsventileingangsanschluss (46), einem zweiten Versorgungsventileingangsanschluss (48) und einem Versorgungsventilausgangsanschluss (50) umfasst, wobei die zwei Versorgungsventileingangsanschlüsse (46, 48) des Versorgungsventils (44) jeweils mit einem der beiden Betriebsbremsdrücke von den beiden Betriebsbremskreisanschlüssen (26, 28) druckbeaufschlagt sind und der Versorgungsventilausgangsanschluss (50) des Versorgungsventils (44) den Ventileingangsdruck des Überströmventils (16) bereitstellt.

7. Mehrkreisschutzventil (10) nach einem der Ansprüche 1 bis 4, **dadurch gekennzeichnet, dass** der Feststellbremskreis (94) parallel zu den Betriebsbremskreisen (58,60) druckversorgt ist.

8. Mehrkreisschutzventil (10) nach einem der vorhergehenden Ansprüche, **dadurch gekennzeichnet, dass** die über die drei Wirkflächen (18, 20, 22) erzeugten Kräfte (18', 20', 22') einzeln kleiner sind als die Schließkraft (24).

9. Mehrkreisschutzventil (10) nach einem der vorhergehenden Ansprüche, **dadurch gekennzeichnet, dass** die über die drei Wirkflächen (18, 20, 22) erzeugten Kräfte (18', 20', 22') paarweise größer sind als die Schließkraft (24).

10. Druckluftversorgungseinrichtung für ein Fahrzeug, insbesondere ein Nutzfahrzeug, mit einem Mehrkreisschutzventil (10) nach einem der vorhergehenden Ansprüche.

11. Verfahren zum Betreiben eines Mehrkreisschutzventils (10) für eine Druckluftversorgungseinrichtung eines Fahrzeugs, insbesondere eines Nutzfahrzeugs, mit
- einem ersten Anschluss (12) für eine Betriebsbremse, wobei der erste Anschluss (12) zwei voneinander getrennte Betriebsbremskreisanschlüsse (26, 28) für einen ersten Betriebsbremskreis (58) und einen zweiten Betriebsbremskreis (60) umfasst, und wobei der erste Betriebsbremskreisanschluss (26) durch ein erstes Betriebsbremskreisüberströmventil (30) und der zweite Betriebsbremskreisanschluss (28) durch ein zweites Betriebsbremskreisüberströmventil (32) abgesichert sind, und
- einem zweiten Anschluss (14) für eine Feststellbremse, der durch ein Überströmventil (16) abgesichert ist,
- wobei der erste Betriebsbremskreis (58) oder der zweite Betriebsbremskreis (60) vorrangig befüllt wird,
**dadurch gekennzeichnet,**
- **dass** eine erste Wirkfläche (18) des Überströmventils (16) mit einem Ventileingangsdruck beaufschlagt wird,
- **dass** eine zweite Wirkfläche (20) des Überströmventils (16) mit einem Ventilausgangsdruck beaufschlagt wird,
- **dass** eine dritte Wirkfläche (22) des Überströmventils (16) mit einem Betriebsbremsdruck aus dem nicht vorrangig befüllten Betriebsbremskreis (60; 58) der Betriebsbremse beaufschlagt wird, und
- **dass** über die drei Wirkflächen (18, 20, 22) erzeugten Kräfte (18', 20', 22') einer Schließkraft (24) entgegenwirken, um das Überströmventil (16) zu öffnen oder offen zu halten.

## Claims

1. A multi-circuit protection valve (10) for a compressed-air supply device of a vehicle, in particular a utility vehicle, with
- a first port (12) for a service brake, wherein the first port (12) has two separate service brake circuit ports (26, 28) for a first service brake circuit (58) and a second service brake circuit (60), and wherein the first service brake circuit port (26) is secured by a first service brake circuit overflow valve (30) and the second service brake circuit port (28) is secured by a second service brake circuit overflow valve (32), and
- with a second port (14) for a parking brake which is secured by an overflow valve (16),
- wherein the first service brake circuit (58) or the second service brake circuit (60) can be filled as a priority, and
- wherein the overflow valve (16) has a first active face (18) which can be pressurised with a valve input pressure, and a second active face (20) which can be pressurised with a valve output pressure,
**characterised in that**
- the overflow valve (16) has a third active face (22) which can be pressurised with a service brake pressure from the service brake circuit (60; 58) which was not filled as a priority, and
- forces (18', 20', 22') generated via the three active faces (16, 18, 20) counter a closing force (24) to open or hold open the overflow valve (16).

2. The multi-circuit protection valve (10) as claimed in claim 1, **characterised in that** the first service brake circuit overflow valve (30) has a lower opening pressure than the second service brake circuit overflow valve (32).

3. The multi-circuit protection valve (10) as claimed in claim 1 or 2, **characterised in that** a non-return valve (34) is arranged parallel to the first service brake circuit overflow valve (30) and allows flow in the direction of the first service brake circuit port (28).

4. The multi-circuit protection valve (10) as claimed in any of claims 1 to 3, **characterised in that** the multi-circuit protection valve (10) comprises a control valve (36) with a first control valve input port (38), a second control valve input port (40) and a control valve output port (42), wherein the two control valve input ports (38, 40) are each pressurised with one of the two service brake pressures from the two service brake circuit ports (26, 28), and the control valve output port (42) of the control valve (36) pressurises the third active face (22) of the overflow valve (16).

5. The multi-circuit protection valve (10) as claimed in any of claims 1 to 4, **characterised in that** the parking brake circuit (94) is post-supplied from the service brake circuits (58, 60).

6. The multi-circuit protection valve (10) as claimed in claim 5, **characterised in that** the multi-circuit protection valve (10) comprises a supply valve (44) with a first supply valve input port (46), a second supply valve input port (48) and a supply valve output port (50), wherein the two supply valve input ports (46, 48) of the supply valve (44) are each pressurised with one of the two service brake pressures from the two service brake circuit ports (26, 28), and the supply valve output port (50) of the supply valve (44) provides the valve input pressure of the overflow valve (16).

7. The multi-circuit protection valve (10) as claimed in any of claims 1 to 4, **characterised in that** the parking brake circuit (94) is supplied with pressure in parallel with the service brake circuits (58, 60).

8. The multi-circuit protection valve (10) as claimed in any of the preceding claims, **characterised in that** the forces (18', 20', 22') generated via the three active faces (18, 20, 22) are smaller individually than the closing force (24).

9. The multi-circuit protection valve (10) as claimed in any of the preceding claims, **characterised in that** the forces (18', 20', 22') generated via the three active faces (18, 20, 22) are greater in pairs than the closing force (24).

10. A compressed-air supply device for a vehicle, in particular a utility vehicle, with a multi-circuit protection valve (10) as claimed in any of the preceding claims.

11. A method for operating a multi-circuit protection valve (10) for a compressed-air supply device of a vehicle, in particular a utility vehicle, with:
- a first port (12) for a service brake, wherein the first port (12) has two separate service brake circuit ports (26, 28) for a first service brake circuit (58) and a second service brake circuit (60), and wherein the first service brake circuit port (26) is secured by a first service brake circuit overflow valve (30) and the second service brake circuit port (28) is secured by a second service brake circuit overflow valve (32), and
- with a second port (14) for a parking brake which is secured by an overflow valve (16),
- wherein the first service brake circuit (58) or the second service brake circuit (60) can be filled as a priority,
**characterised in that**
- a first active face (18) of the overflow valve (16) is pressurised with a valve input pressure,
- a second active face (20) of the overflow valve (16) is pressurised with a valve output pressure,
- a third active face (22) of the overflow valve (16) is pressurised with a service brake pressure from the service brake circuit (60, 58) of the service brake which was not filled as a priority, and
- forces (18', 20', 22') generated via the three active faces (18, 20, 22) counter a closing force (24) to open or hold open the overflow valve (16).

## Revendications

1. Soupape (10) de protection à circuits multiples pour un dispositif d'alimentation en air comprimé d'un véhicule, notamment d'un véhicule utilitaire, comprenant
- un premier raccord (12) pour un frein de service, le premier raccord (12) comprenant deux raccords (26, 28) de circuit de frein de service séparés l'un de l'autre pour un premier circuit (58) de frein de service et pour un deuxième circuit (60) de frein de service et dans lequel le premier raccord de circuit de frein de service est protégé par une première soupape (30) de décharge de circuit de frein de service et le deuxième raccord (28) de circuit de frein de service par une deuxième soupape (32) de décharge de circuit de frein de service, et
- un deuxième raccord (14) pour un frein de stationnement, qui est protégé par une soupape (16) de décharge,
- dans laquelle le premier circuit (58) de frein de service ou le deuxième circuit (60) de frein de service peut être rempli prioritairement, et
- dans laquelle la soupape (16) de décharge a une première surface (18) efficace pouvant être soumise à une pression d'entrée de soupape et une deuxième surface (20) efficace pouvant être soumise à une pression de sortie de soupape,
**caractérisée**
- **en ce que** la soupape (16) de décharge a une troisième surface (22) efficace pouvant être soumise à une pression de frein de service à partir du circuit (60, 58) du frein de service qui n'est pas rempli prioritairement et
- **en ce que** des forces (18', 20', 22') produites par les trois surfaces (16, 18, 20) efficaces s'opposent à une force (24) de fermeture pour ouvrir ou maintenir ouverte la soupape (16) de décharge.

2. Soupape (10) de protection à circuits multiples suivant la revendication 1, **caractérisée en ce que** la première soupape (30) de décharge de circuit de frein de service a une pression d'ouverture plus basse que la deuxième soupape (32) de décharge de circuit de frein de service.

3. Soupape (10) de protection à circuits multiples suivant la revendication 1 ou 2, **caractérisée en ce qu'**il est monté parallèlement à la première soupape (30) de décharge de circuit de frein de service un clapet anti-retour (34) qui laisse passer dans le sens allant vers le premier raccord (28) de circuit de frein de service.

4. Soupape (10) de protection à circuits multiples suivant l'une des revendications 1 à 3, **caractérisée en ce que** la soupape (10) de protection à circuits multiples comprend une soupape (36) de commande ayant un premier raccord (38) d'entrée de soupape ce commande, une deuxième raccord (40) d'entrée de soupape de commande et un raccord (42) de sortie de soupape de commande, les deux raccords (38, 40) d'entrée de soupape de commande pouvant être soumis respectivement à l'une des deux pressions de frein de service par les deux raccords (26, 28) de circuit de frein de service et le raccord (42) de sortie de soupape de commande de la soupape (36) de commande alimentant en pression la troisième surface (22) efficace de la soupape (16) de décharge.

5. Soupape (10) de protection à circuits multiples suivant l'une des revendications 1 à 4, caractérisée en ce le circuit (94) de frein de stationnement est réalimenté à partir des circuits (58, 60) de frein de service.

6. Soupape (10) de protection à circuits multiples suivant la revendication 5, **caractérisée en ce que** la soupape (6) de protection à circuits multiples comprend une soupape (40) d'alimentation ayant un premier raccord (46) d'entrée de soupape d'alimentation, un deuxième raccord (48) d'entrée de soupape d'alimentation et un raccord (50) de sortie de soupape d'alimentation, les deux raccords (46, 48) d'entrée de soupape d'alimentation de la soupape (44) d'alimentation pouvant être soumis respectivement à l'une des deux pressions de frein de service par les deux raccords (26, 28) de circuit de frein de service et le raccord (50) de sortie de soupape d'alimentation de la soupape (44) d'alimentation procurant la pression d'entrée de soupape de la soupape (16) de décharge.

7. Soupape (10) de protection à circuits multiples suivant l'une des revendications 1 à 4, **caractérisée en ce que** le circuit (94) de frein de stationnement est alimenté en pression en parallèle aux circuits (58, 60) de frein de service.

8. Soupape (10) de protection à circuits multiples suivant l'une des revendications précédentes, **caractérisée en ce que** les forces (18', 20', 22') produites par les trois surfaces (18, 20, 22) efficaces sont plus petites individuellement que la force (24) de fermeture.

9. Soupape (10) de protection à circuits multiples suivant l'une des revendications précédentes, **caractérisée en ce que** les forces (18', 20', 22') produites par les trois surfaces (18, 20, 22) efficaces sont plus grandes par paire que la force (24) de fermeture.

10. Dispositif d'alimentation en air comprimé pour un véhicule, notamment pour un véhicule utilitaire, comprenant une soupape (10) de protection à circuits multiples suivant l'une des revendications précédentes.

11. Procédé pour faire fonctionner une soupape (10) de protection à circuits multiples pour un dispositif d'alimentation à air comprimé d'un véhicule, notamment d'un véhicule utilitaire, comprenant
- un premier raccord (12) pour un frein de service, le premier raccord (12) comprenant deux raccords (26, 28) de circuit de frein de service séparés l'un de l'autre pour un premier circuit (58) de frein de service et pour un deuxième circuit (60) de frein de service et dans lequel le premier raccord de circuit de frein de service est protégé par une première soupape (30) de décharge de circuit de frein de service et le deuxième raccord (28) de circuit de frein de service par une deuxième soupape (32) de décharge de circuit de frein de service, et
- un deuxième raccord (14) pour un frein de stationnement, qui est protégé par une soupape (16) de décharge,
- dans lequel on remplit prioritairement le premier circuit (58) de frein de service ou le deuxième circuit de frein de service,
**caractérisé**
- **en ce que** l'on soumet une première surface (18) efficace de la soupape (18) de décharge à une pression d'entrée de soupape,
- **en ce que** l'on soumet une deuxième surface (20) efficace de la soupape (18) de décharge à une pression de sortie de soupape,
- **en ce que** l'on soumet une troisième surface (22) efficace de la soupape (16) de décharge à une pression de frein de service à partir du circuit (60, 58) de frein de service, qui n'est pas rempli prioritairement du frein de service, et
- **en ce que** des forces (18', 20', 22') produites par les trois surfaces (16, 18, 20) efficaces s'opposent à une force (24) de fermeture pour ouvrir ou maintenir ouverte la soupape (16) de décharge.
